# EUROPEAN PATENT SPECIFICATION

(11) **EP 4 558 855 B1**
(45) Date of publication and mention of the grant of the patent: **28.10.2026**
(21) Application number: 23752041.6
(22) Date of filing: 17.07.2023
(51) Int. Cl.: G02B 21/36

(54) **METHOD AND SYSTEM FOR MANAGING IN REAL A VIDEO STREAM GENERATED BY A DIGITAL OPTICAL MICROSCOPE**
VERFAHREN UND SYSTEM ZUR ECHTZEITVERWALTUNG VON VIDEODATEN, DIE VON EINEM DIGITALEN OPTISCHEN MIKROSKOP ERZEUGT WERDEN
PROCÉDÉ ET SYSTÈME DE GESTION EN TEMPS RÉEL D'UN FLUX VIDÉO GÉNÉRÉ PAR UN MICROSCOPE OPTIQUE NUMÉRIQUE

(30) Priority: 19.07.2022 IT 202200015114
(43) Date of publication of application: 28.05.2025
(73) Proprietor: NTP Nano Tech Projects S.r.l., 38068 Rovereto (TN) (IT)
(72) Inventor: PANTANOWITZ, Liron, 38068 Rovereto (Trento) (IT); MARONCELLI, Gianluca, 38068 Rovereto (Trento) (IT); MALAN, Mauro Andrea, 38068 Rovereto (Trento) (IT); GALAVOTTI, Massimo, 38068 Rovereto (Trento) (IT); CARLONI, Adolfo, 38068 Rovereto (Trento) (IT)
(74) Representative: Leihkauf, Steffen Falk
(86) International application number: PCT/IB2023/057258
(87) International publication number: WO 2024/018351

(56) References cited:
- WO-A1-2014/165989
- WO-A1-99/30264
- US-A1- 2018 356 621

## Description

### Field of the invention

The present invention relates to the field of microscopic analysis, in particular to the medical field of tissue analysis and histopathological diagnosis.

### Background art

In the field of digital pathology, instruments capable of displaying histological samples placed on top of a slide in the form of digital images are employed; in particular, digital optical microscopes or scanners provide high-resolution images of the entire slide including different scanning planes of the preparation: the digital images thus produced with this technology are large files and require computers with high computational and memory characteristics and digital archives with sufficient space in which the information is deposited and from which the doctor can retrieve it remotely. In general, this results in a non-negligible operating time for the doctor who must carry out the diagnosis, which is certainly not suitable in the case of emergency activities.

Moreover, the huge amount of data, often of the order of tens of GB required to scan various positions of the sample, makes it impossible to transmit the data to a remote analysis workstation in real time, thus preventing remote operation.

Therefore, the need is felt to provide a method to manage digital image acquisition in real time by means of a digital optical microscope from a workstation remote from the microscope itself.

In other words, the need is felt to display what the microscope sees quickly and remotely and vary the acquisition parameters remotely and perform new acquisitions quickly, as well as to process the acquired images in real time, from a remote workstation.

The difficulties in performing such activities remotely by means of a polarizing digital optical microscope multiply.

Indeed, the polarizing digital optical microscope uses polarized light to study the samples, unlike conventional optical microscopes which use normal light.

In polarized light, light waves vibrate in a given direction, while under normal light conditions, light waves vibrate in random directions.

Polarized light cannot be seen by human eyes under normal circumstances, but it can be used in polarized light microscopy to highlight the characteristics of minerals, crystals, and other materials.

Indeed, a polarizing microscope uses the birefringent optical properties of anisotropic materials to study them.

Unlike isotropic materials (such as gases and liquids), which have only one refractive index, anisotropic materials are solid substances having different refractive indices. For example, birefringence or double refraction occurs when a light wave passing through an anisotropic material is split into two beams of different velocities.

In practice, the sample to be studied is placed on a slide above a sample-holder table. The sample is then illuminated by a light source placed under the sample table.

The light passes through a polarizing filter, referred to as a polarizer, and then passes through the birefringent sample. The polarizer is usually fixed in an East-West vibration direction but it can be rotated as needed.

A polarizing microscope comprises another polarizing filter, referred to as an analyzer, which is usually located above the targets, before the eyepiece or camera, in the case of digital image acquisition, and can be moved in and out of the optical path.

The presence of an analyzer, i.e., another polarizing filter placed between the lens and the eyepiece/camera, and the activation thereof simultaneously with the polarizing filter lead to the so-called quenching condition, i.e., the cancellation of the incident light beam, due to the perpendicular polarizing action of the analyzer with respect to the polarizer.

Indeed, the characteristics generally defining a linear polarizer are the transmission and absorption capabilities thereof.

A transmission axis, which often varies based on the polarizer grade, is what determines how much light can pass through. The absorbing axis does not allow the light to pass through the barrier.

It is then possible to use two polarizers at 90° angles to each other so that the light does not pass through to the other side.

Given the requirement for the relative phase shift characteristic between the two polarizers, the two moving mechanisms associated therewith can also be reversed, making the analyzer rotatable instead of the filter. The lenses used in a polarizing microscope must be free of deformations.

Most crystalline and mineral materials, such as those also contained in organic tissues, are capable of changing the polarized light directions, allowing some of the light to pass from the analyzer to the eyepieces/camera.

Using only one polarizer, it is possible to display the slide under the so-called "flat polarized" light. Using the two polarizers, analysis is possible in the so-called "cross-polarized" light mode, for example by holding the polarizing filter still and rotating the analyzer about the axis thereof.

Using the linear polarization, depending on the angle of the polarizer, the light can be directed at a given angle to different positions with respect to the object. Hence, the device can be used to minimize reflections, control light intensity, or eliminate light in order to make colors more vibrant. Various types of linear polarizers are available, including dichroic, reflection, double-refraction, and beam-splitting polarizers.

Hence, it can be understood how the technical difficulty of implementing the polarizer in digital solutions with scanner technology lies in the huge data load involved in the preliminary scanning operation of the single slide (of the order of tens of GBs to scan at various heights of the sample), to which the data generated for each frame of the slide as the mutual angle between the polarizer elements changes should thus be added.

For example, assuming that, for each frame, the acquisition of the polarizer effect at a rotation arc of 25° is desired, this would result in the management of a huge data load, over 1,000 GB, for a single slide (we are on the order of one Terabyte). In short, this is de *facto* impractical.

Therefore, a need is felt to manage a digital optical microscope from a remote workstation and vary the parameters thereof during remote observation, thus avoiding the need to transmit huge amounts of data from the acquisition workstation to the analysis workstation.

WO 2014/165989 A1 discloses a microscope for time-sensitive examination of a histology sample and a remote processor and display. An image is selected by a pathologist and saved. A polarization mode is possible.

US 2018/356621 A1 discloses a digital optical microscope comprising a polarizing light source and a video camera. A remote computer and monitor are used to control the digital optical microscope.

WO 99/30264 A1 discloses a microscope and a remote workstation and monitor. Digital images of the sample are transmitted in real time.

### Summary of the invention

It is the object of the present invention to devise and provide a method and a system which allow meeting the aforesaid needs and at least partially obviating the drawbacks complained above with reference to the prior art.
In particular, it is a task of the present invention to provide a method and system which allow the operator at the remote analysis workstation to interact with the microscope in the acquisition workstation, continuously in live view, without ever disengaging from the field of view, allowing the operator to select the representative images for analysis while displaying the video stream in real time.

It is another object of the present invention to provide a method and a system which allow quickly and remotely displaying what the microscope sees and varying the acquisition parameters remotely, in addition to quickly performing new acquisitions, as well as processing the acquired images in real time, from a remote workstation.

It is a further object of the present invention to provide a method and a system which allow managing a digital optical microscope from a remote workstation, and varying the parameters thereof during remote observation, thus avoiding the need to transmit huge amounts of data from the acquisition workstation to the analysis workstation.

These and other objects and advantages are achieved by a method and a system according to the independent claims. The method according to the invention allows the operator, who is at a remote workstation with respect to the microscope, to operate in live-view with the microscope, employing a live streaming technique, always in live stream with the sample, always engaged with the field of view offered by the camera of the microscope at the instant of observation, and any possible change in the field of view occurs live, allowing the remote operator to act on the sample moving devices on the microscope and display remotely at the same time. Therefore, the remote operator is able to interact continuously and directly with the observed object, operating remotely on the microscope components.
In other words, the method according to the invention uses a continuous video stream and allows the operator, while remotely displaying the continuous stream in real time, to interact with the microscope, select the images of interest while displaying the video stream in real time, and store only these on the remote workstation.

Further objects, solutions, and advantages are present in the embodiments described below and claimed in the dependent claims.

### Brief description of the drawings

The invention will be shown below through the description of some embodiments thereof, given by way of non-limiting example, with reference to the accompanying drawings, in which:

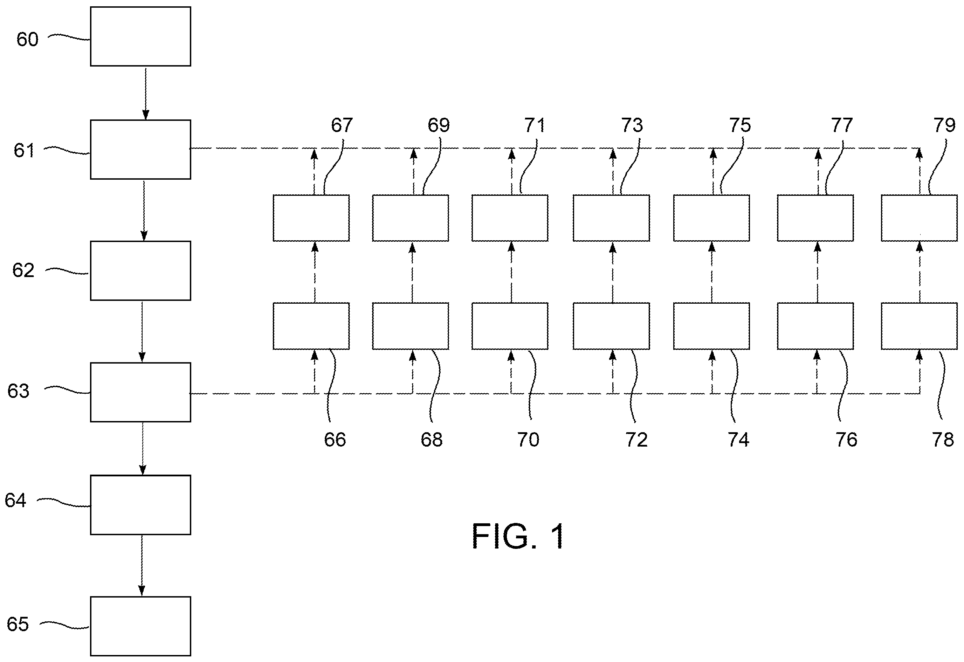

- figure 1 shows a block diagram illustrating the method according to the invention;

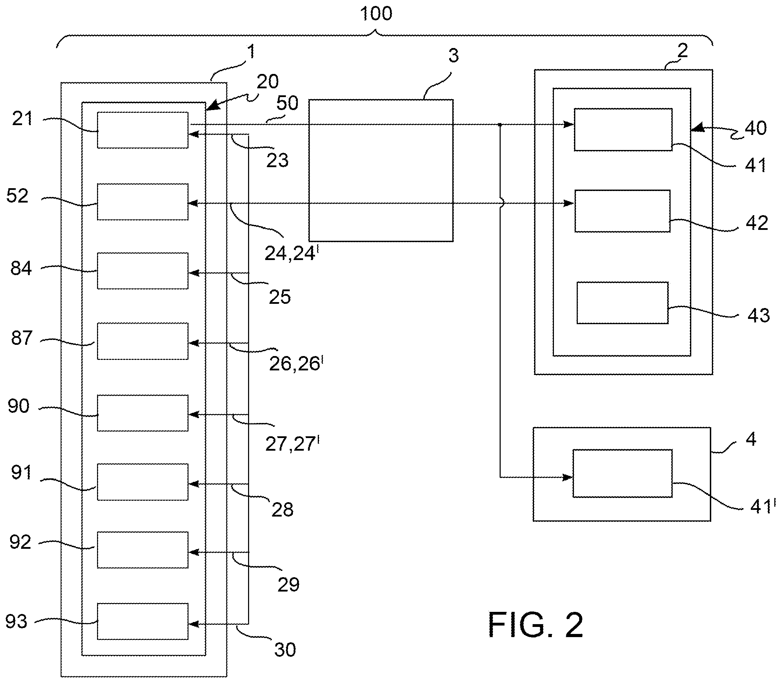

- figure 2 shows a block diagram illustrating a digital image acquisition system according to the invention;

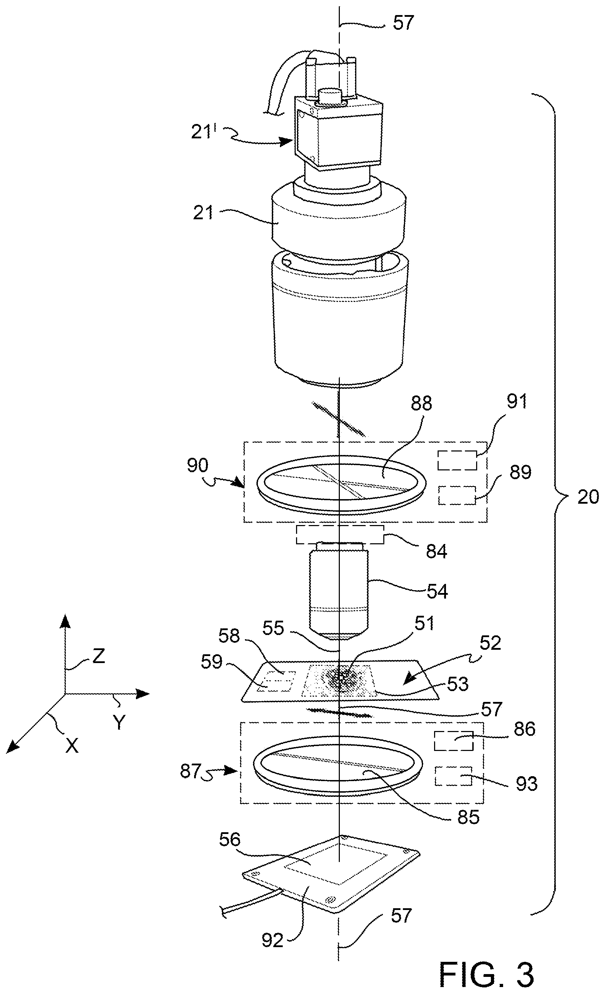

- figure 3 shows a partial diagrammatic view of a digital optical microscope of the digital image acquisition system of the system in figure 2.

### Description of preferred embodiments

A method according to the invention for acquiring and transmitting in real time a plurality of digital images 50 in sequence or, in other words, a video stream 50, of a sample to be examined 51 from an acquisition workstation 1 to an analysis workstation 2 is illustrated with reference to the figures.

The sample to be examined 51 is placed in the acquisition workstation 1, whereas the analysis workstation 2 is remote from the acquisition workstation 1.

The plurality of digital images 50 in sequence, namely the video stream, are generated by a digital image acquisition system 100.

The digital image acquisition system 100 comprises a digital optical microscope 20 placed in said acquisition workstation 1, said microscope 20 having an electronic acquisition unit 21 of a plurality of images 50 in sequence, namely a video stream, of said sample to be examined 51 comprising a digital optical sensor 21', a sample-holder table 52 having a seat 53 for a sample adapted to accommodate or support said sample to be examined 51, an optical lens 54 associated with said acquisition unit 21 and defining a lens optical axis 55 and a lens focal point, a light source 56 oriented toward said seat 53 for a sample to illuminate said sample to be examined 51, said digital optical microscope 20 defining a microscope optical axis 57 passing through said digital optical sensor and said seat 53 for a sample, coaxial with said lens optical axis 55.

Focal point of a lens means the point placed along the optical axis where the lens is capable of reconstructing a perfectly focused image. The optical sensor must be located at this point.

The digital image acquisition system 100 further comprises a remote electronic control unit 40 for said digital optical microscope placed in said analysis workstation 2, said remote electronic control unit 40 comprising display means 41 to display said plurality of digital images 5C in sequence,namely said video stream, of said sample to be examined, command means 42, and storage means 43.

The digital image acquisition system 100 further comprises signal communication means 3 configured to connect said remote electronic control unit 40 to said electronic acquisition unit 21 of said plurality of digital images in sequence, namely said video stream.

The aforesaid method of acquiring and transmitting digital images 50 in real time comprises the following steps:
sending (60), by said remote electronic control unit 40 upon a command of an operator, or a doctor, in said analysis workstation 2, an acquisition start signal 23 of a plurality of digital images 50 in sequence, namely a video stream, of the sample to be examined, to the electronic acquisition unit 21 to acquire a plurality of digital images in sequence, namely a video stream, of the sample to be examined;

- acquiring (61) a plurality of digital images in sequence, namely a video stream, by said electronic acquisition unit 21 of the digital optical microscope 20;
- transmitting (62) in real time each image of said plurality of digital images 50 in sequence, namely said video stream, from said electronic acquisition unit 21 to said remote electronic control unit 40 by means of said communication means 3;
- displaying (63) in real time, and in live-view mode, each image of said plurality of digital images 50 in sequence, namely said video stream, in said analysis workstation 2 by means of said display means 41 of said electronic control unit 40;
- selecting (64), by said operator, or doctor, by means of said command means 42 in said analysis workstation 2, one or more images containing representative information for the analysis of said sample, from said plurality of images 50 in sequence, namely said video stream, during the displaying step (63);
- storing (65) said one or more selected images by means of said storage means 43 of said remote electronic control unit 40 in said analysis workstation 2.

According to an embodiment, said digital optical microscope 20 comprises a motorized sample-holder table moving unit 58 configured to move said sample-holder table 52 along two movement axes X, Y orthogonal to each other and orthogonal to said microscope optical axis 57, where the digital signal communication means 3 are configured to connect said remote electronic control unit 40 to said motorized sample-holder table moving unit 58.

According to an embodiment, the method comprises the steps of: sending (66), by said remote electronic control unit 40 to said sample-holder table moving unit 58, a table movement signal 24, upon a command of the operator, or doctor, by means of said command means 42 preferably during said displaying step (63), and moving said sample-holder table along said two movement axes X, Y by means of said sample-holder table movement unit as a function of said table movement signal 24.

According to an embodiment, the digital optical microscope comprises a motorized focus distance adjustment unit 59 for adjusting the relative distance between said lens focal point and said seat 53 for a sample measured along an adjustment axis Z parallel to said microscope optical axis 57, and the digital signal communication means 3 are configured to connect said remote electronic control unit 40 to said motorized focus distance adjustment unit 59.

According to an embodiment, the method comprises the steps of: sending (68), by said remote electronic control unit 40 to said motorized focus distance adjustment 59, a focus distance adjustment signal 24', upon a command of the operator, or doctor, by means of said command means 42, preferably during said displaying step (63); and moving said sample-holder table 52 and/or said optical lens 54 along said adjustment axis Z by means of said motorized focus distance adjustment unit 59, as a function of said adjustment signal 24'.

Moving the sample-holder table 52 close to or away from the optical lens 54 along the Z direction, preferably along the microscope optical axis 57, implements the function of enlarging or reducing the field of view, and thus allows implementing the zoom function.

According to an embodiment, the digital optical microscope 20 comprises a motorized lens changing unit 84 comprising a plurality of lenses having respective mutually different focal lengths, where said motorized lens changing unit 84 is configured to selectively position a selected lens 54 of said plurality so that the optical axis of said selected lens 55 is positioned along said microscope optical axis 57, where the digital signal communication means 3 are configured to connect said remote electronic control unit 40 to said motorized lens changing unit 84.

According to an embodiment, the method comprises the steps of: sending (70), by said remote electronic control unit 40 to said motorized lens changing unit 84, a lens changing signal 25, upon a command of the operator, or doctor, by means of said command means 42, preferably during said displaying step (63); arranging said selected lens 54 with said lens optical axis 55 along said microscope optical axis 57 by means of said motorized lens changing unit 84 as a function of said lens changing signal 25.

According to the invention, the digital optical microscope 20 comprises a first polarizing unit 87 comprising a first polarizing filter 85 and a first motorized activation/deactivation moving unit 86 for moving said first polarizing filter 85 from a resting position not arranged along said microscope optical axis 57 to an operating position interposed between said light source 56 and said sample-holder table 52 along said microscope optical axis 57, and vice versa; and where said digital signal communication means 3 are configured to connect said remote electronic control unit 40 to said first motorized activation/deactivation moving unit 86.

According to an alternative of the invention, the method comprises the steps of: sending (72), by said remote electronic control unit 40 to said first motorized activation/deactivation moving unit 86 upon a command of the operator, or doctor, a first polarizing unit activation signal 26, during said displaying step (63), and a step of moving (73) said first polarizing filter 85 from said resting position to said operating position, by means of said first motorized activation/deactivation moving unit 86, as a function of said first polarizing unit activation signal 26.

According to an alternative of the invention, the method comprises the steps of: sending (72), by said remote electronic control unit 40 to said first motorized activation/deactivation moving unit 86 upon a command of said operator, or doctor, a first polarizing unit activation signal 26' during said displaying step (63); moving (73) said first polarizing filter 85 from said resting position to said operating position, by means of said first motorized activation/deactivation moving unit 86, as a function of said first polarizing unit activation signal 26'.

According to an embodiment, said digital optical microscope 20 comprises an analyzer polarizing unit 90 comprising an analyzer polarizing filter 88 and a motorized analyzer activation/deactivation moving unit 89 for moving said analyzer polarizing filter 88 from a resting position not arranged along said microscope optical axis 57 to an operating position interposed between the digital optical sensor 21' and said optical lens 54 along said microscope optical axis 57, and vice versa.

According to an embodiment, the digital signal communication means 3 are further configured to connect said remote electronic control unit 40 to said motorized analyzer activation/deactivation moving unit 89.

According to an embodiment, the method comprises the steps of: sending (74), by said remote electronic control unit 40 to said analyzer polarizing unit 90 upon a command of said operator, or doctor, an analyzer polarizing unit activation signal 27 preferably during said displaying step; and moving (75) said analyzer polarizing filter 88 from said resting position to said operating position, by means of said analyzer activation/deactivation moving unit 89, as a function of said analyzer polarizing unit activation signal 27.

According to an embodiment, the method comprises a step of sending (74), by said remote electronic control unit 40 to said analyzer polarizing unit 90 upon a command of said operator, or doctor, an analyzer polarizing unit deactivation signal 27, preferably during said displaying step (63)'.

According to an embodiment, the method comprises a step of moving (75) said analyzer polarizing filter 88 from said operating position to said resting position, by means of said analyzer activation/deactivation moving unit 89 as a function of said analyzer polarizing unit deactivation signal 27'.

According to an embodiment, the analyzer polarizing unit 90 comprises a motorized rotational adjustment unit 91 to adjust the angular position of said analyzer polarizing filter 88 about a rotational axis of said analyzer polarizing filter arranged along said microscope optical axis 57, and said digital signal communication means 3 are further configured to connect said remote electronic control unit 40 to said motorized rotational adjustment unit 91.

According to an embodiment, the method comprises the steps of: sending (76), by said remote electronic control unit 40 to said analyzer polarizing unit 90 upon a command of the operator, or doctor, a rotation signal 28 of said analyzer polarizing filter, preferably during said displaying step (63); and rotating 77 said analyzer polarizing filter 88, by means of said motorized rotational adjustment unit 91, as a function of said rotation signal 28 of said analyzer polarizing filter.

According to another embodiment, said first polarizing unit 87 comprises a motorized polarizer rotational adjustment unit 93 configured to adjust the angular position of said first polarizing filter 85 about a rotational axis arranged along said microscope optical axis 57, and where said digital signal communication means 3 are further configured to connect said remote electronic control unit 40 to said motorized polarizer rotational adjustment unit 93.

According to an embodiment, the method comprises the steps of: sending, by said remote electronic control unit 40 to said analyzer polarizing unit 87 upon a command of the operator, or doctor, a rotation signal 30 of said polarizing filter 85, preferably during said displaying step; and rotating said polarizing filter 85, by means of said motorized polarizer rotational adjustment unit 93, as a function of said rotation signal 30 of said polarizing filter 85.

In other words, for certain applications, the digital optical microscope can comprise both a motorized rotational adjustment unit 93 of the polarizing filter 85 and a motorized rotational adjustment unit 92 of the analyzer polarizing filter 88 to adjust them both in relative rotation to each other, or, in other applications, it can comprise only a rotational adjustment unit of the polarizing filter 85 and not comprise a rotational adjustment unit of the analyzer polarizing filter 88. The electronic remote control unit 40 can thus be configured to control, upon a command of the doctor, the relative rotation of the polarizing filter 85 and the analyzer polarizing filter 88 in a coordinated and/or simultaneous manner, in order to polarize the light passing through each of them in a combined manner, for example.

According to an embodiment, the digital optical microscope 20 comprises a light intensity adjustment unit 92 of said light source 56, and where said digital signal communication means 3 are configured to connect said remote electronic control unit 40 to said light intensity adjustment unit 92.

According to an embodiment, the method comprises the steps of: sending (78), by said remote electronic control unit 40 to said analyzer polarizing unit 92 upon a command of the operator, or doctor, a light intensity adjustment signal 29, preferably during said displaying step (63); and adjusting (79) the light intensity of said light source 56, by means of said light intensity adjustment unit 92, as a function of said light intensity adjustment signal 29.

According to an embodiment, the method comprises a step of transmitting in real time said plurality of images in sequence, namely said video stream, to at least one remote display-only workstation 4, following a doctor's command provided to said remote electronic control unit 40 by means of said command means 42.

The at least one display-only workstation 4, used by a user in "viewer" mode, only allows displaying in real time the same digital images shown to the doctor by means of the display means 41 of the remote electronic control unit 40, with no possibility of command by the user in the "viewer" mode.

The aforesaid remote display-only workstation can comprise a monitor or digital display 41', e.g., a LED panel, or a projector, or can comprise a personal computer equipped with said monitor 41', or a portable electronic device equipped with an electronic display, e.g., a smartphone, tablet, laptop, etc.

The user in the "viewer" mode is only allowed the function of displaying images. Indeed, the user in the "viewer" mode, is the one who, positioned remotely from the microscope, is only able to display the images, which continue to be managed and shared by the doctor, who thus performs the function of operator in the "master" mode of the session, residing at the analysis station 2, which is located remotely from the acquisition workstation 1.

The use of the at least one display-only workstation 4 is suitable, for example, for the educational use of the system, e.g., users in the "viewer" mode could be students at a university lecture, each being in a respective remote location, and in which the doctor placed in the analysis workstation is the lecturer.

The doctor, who interacts in the "master" mode with the remote control unit 40 by means of the command means 42, can manage the digital images by performing, for example, shifts, zooms, changes in brightness level, and the users in the "viewer" mode can simultaneously remotely follow such a management by the doctor.

The method described above is easily employable under the direct control of the remotely seated pathologist, thus allowing the diagnosis of specific cases of tissues with elements sensitive to the polarization effect (presence of crystals in certain organs, amyloidosis, etc.).

Indeed, in the case of digital pathology, the two polarizers are moved by electric motors and controlled by means of software. The end result is that the doctor can view live, remotely by means of the data network, the sample placed on the slide, and also collect information therefrom resulting from the appropriate use of polarized light.

According to another aspect of the present invention, the aforesaid object and advantages are achieved by a digital image acquisition system 100 according to claim 9.

According to an embodiment, the digital optical microscope 20 comprises a motorized sample-holder table moving unit 58 configured to move said sample-holder table 52 along two movement axes X, Y orthogonal to each other and orthogonal to said microscope optical axis 57, and where the digital signal communication means 3 are configured to connect said remote electronic control unit 40 to said motorized sample-holder table moving unit 58.

According to an embodiment, the digital optical microscope 20 comprises a motorized focus distance adjustment unit 59 for adjusting the relative distance between said lens focal point and said seat 53 for a sample measured along an adjustment axis Z parallel to said microscope optical axis 57, and where said digital signal communication means 3 are configured to connect said remote electronic control unit 40 to said motorized focus distance adjustment unit 59.

According to an embodiment, the digital optical microscope 20 comprises a motorized lens changing unit 84 comprising a plurality of lenses having respective mutually different focal lengths, where said motorized lens changing unit 84 is configured to selectively position a selected lens 54 of said plurality so that the optical axis of said selected lens 54 is positioned along said microscope optical axis 57, and where said digital signal communication means 3 are configured to connect said remote electronic control unit 40 to said motorized lens changing unit 84.

According to the invention, the digital optical microscope 20 comprises a first polarizing unit 87 comprising a first polarizing filter 87 and a first motorized activation/deactivation moving unit 86 for moving said first polarizing filter 85 from a resting position not arranged along said microscope optical axis 57 to an operating position interposed between said light source 56 and said sample-holder table 52 along said microscope optical axis 57, and vice versa; and where said digital signal communication means 3 are configured to connect said remote electronic control unit 40 to said first motorized activation/deactivation moving unit 86.

According to an embodiment, the digital optical microscope 20 comprises an analyzer polarizing unit 90 comprising an analyzer polarizing filter 88 and a motorized analyzer activation/deactivation moving unit 89 for moving said analyzer polarizing filter 88 from a resting position not arranged along said microscope optical axis 57 to an operating position interposed between said digital optical sensor 21' and said optical lens 54 along said microscope optical axis 57, and vice versa; and where said digital signal communication means 3 are further configured to connect said remote electronic control unit 40 to said motorized analyzer activation/deactivation moving unit 89.

According to an embodiment, said analyzer polarizing unit 90 comprises a motorized rotational adjustment unit 91 for adjusting the angular position of said analyzer polarizing filter 88 about a rotational axis of said analyzer polarizing filter 88 arranged along said microscope optical axis 57; and where said digital signal communication means 3 are further configured to connect said remote electronic control unit 40 to said motorized rotational adjustment unit 91.

According to an embodiment, the digital optical microscope 20 comprises a light intensity adjustment unit 92 of said light source 56, and where said digital signal communication means 3 are configured to connect said remote electronic control unit 40 to said light intensity adjustment unit 92.

According to an embodiment, the remote control unit 40 is configured to allow said operator, or doctor, to draw one or more lines and/or one or more marks on said selected image, by means of said command means 42.

## Claims

1. A method for acquiring and transmitting in real time a digital video stream (50) in live-view mode of a sample to be examined (51) placed at an acquisition workstation (1) to an analysis workstation (2), said analysis workstation (2) being remote from said acquisition workstation (1), said digital video stream (50) being generated by a digital image acquisition system (100) that comprises:
- a digital optical microscope (20) placed in said acquisition workstation (1), said digital optical microscope (20) having an electronic acquisition unit (21) of a video stream (50) of said sample to be examined (51) comprising a digital optical sensor (21'), a sample-holder table (52) having a seat for a sample (53) adapted to accommodate or support said sample to be examined (51), an optical lens (54) associated with said acquisition unit (21) and defining a lens optical axis (55) and a lens focal point, a light source (56) oriented toward said seat for a sample (53) to illuminate said sample to be examined (51), said digital optical microscope (20) defining a microscope optical axis (57) passing through said digital optical sensor and said seat for a sample (53), coaxial with said lens optical axis (55);
- a remote electronic control unit (40) for said digital optical microscope placed in said analysis workstation (2), said remote electronic control unit (40) comprising display means (41) to display said video stream (50) in live-view mode of said sample to be examined, command means (42), storage means (43);
- digital signal communication means (3) configured to connect said remote electronic control unit (40) to said electronic acquisition unit (21) of said video stream (50), and configured to connect said remote electronic control unit (40) to said first motorized activation/deactivation moving unit (86);
the method comprising the steps of:
- sending (60), by said remote electronic control unit (40) upon a command of an operator, or a doctor, in said analysis workstation (2), an acquisition start signal (23) of said video stream of the sample to be examined, to the electronic acquisition unit (21) to acquire said video stream (50) of the sample to be examined;
- acquiring (61) said video stream (50) by said electronic acquisition unit (21) of the digital optical microscope (20);
- transmitting (62) in real time said video streaming (50) from said electronic acquisition unit (21) to said remote electronic control unit (40) by means of said digital signal communication means (3),
- displaying (63) in live-view mode said acquired video stream (50) in said analysis workstation (2) by means of said display means (41) of said electronic control unit (40); **characterised in that**
said digital optical microscope (20) comprises a first polarizing unit (87) comprising a first polarizing filter (85) and a first motorized activation/deactivation moving unit (86) for moving said first polarizing filter (85) from a resting position not arranged along said microscope optical axis (57) to an operating position interposed between said light source (56) and said sample-holder table (52) along said microscope optical axis (57), and vice versa;
further **characterised in that** the method comprises:
- sending (72), by said remote electronic control unit (40) to said first motorized activation/deactivation moving unit (86) upon a command of the operator, or doctor, a first polarizing unit activation signal (26) during said displaying step (63); and moving (73) said first polarizing filter (85) from said resting position to said operating position, by means of said first motorized activation/deactivation moving unit (86), as a function of said first polarizing unit activation signal (26),
or
- sending (72), by said remote electronic control unit (40) to said first motorized activation/deactivation moving unit (86) upon a command of said operator, or doctor, a first polarizing unit deactivation signal (26') during said displaying step (63); and moving (73) said first polarizing filter (85) from said operating position to said resting position, by means of said first motorized activation/deactivation moving unit (86), as a function of said first polarizing unit deactivation signal (26');
- selecting (64), by said operator, or doctor, by means of said command means (42) in said analysis workstation (2), one or more images containing representative information for the analysis of said sample, from said acquired video stream (50), during the displaying step (63);
- storing (65) said one or more selected images, by means of said storage means (43) of said remote electronic control unit (40) in said analysis workstation (2).

2. A method according to claim 1, wherein:
- said digital optical microscope (20) comprises a motorized sample-holder table moving unit (58) configured to move said sample-holder table (52) along two movement axes (X, Y) orthogonal to each other and orthogonal to said microscope optical axis (57), and wherein
- said digital signal communication means (3) are configured to connect said remote electronic control unit (40) to said motorized sample-holder table moving unit (58);
the method comprising the steps of:
- sending (66), by said remote electronic control unit (40) to said motorized sample-holder table moving unit (58), a table movement signal (24), upon a command of the operator, or doctor, provided by means of said command means (42) during said displaying step (63);
- moving said sample-holder table along said two movement axes (X, Y) by said motorized sample-holder table moving unit as a function of said table movement signal (24).

3. A method according to claim 1 or 2, wherein:
- said digital optical microscope comprises a motorized focus distance adjustment unit (59) to adjust the relative distance between said lens focal point and said seat for a sample (53) measured along an adjustment axis (Z) parallel to said microscope optical axis (57); wherein
- said digital signal communication means (3) are configured to connect said remote electronic control unit (40) to said motorized focus distance adjustment unit (59);
the method comprising the steps of:
- sending (68), by said remote electronic control unit (40) to said motorized focus distance adjustment unit (59) a focus distance adjustment signal (24'), upon a command of the operator, or doctor, provided by means of said command means (42) during said displaying step (63);
- moving said sample-holder table (52), and/or said optical lens (54) along said adjustment axis (Z) by means of said motorized focus distance adjustment unit (59), as a function of said adjustment signal (24').

4. A method according to at least one preceding claim, wherein:
- said digital optical microscope (20) comprises a motorized lens changing unit (84) comprising a plurality of lenses having respective mutually different focal lengths, wherein said motorized lens changing unit (84) is configured to selectively position a selected lens (54) of said plurality so that the optical axis of said selected lens (55) is positioned along said microscope optical axis (57), wherein
said digital signal communication means (3) are configured to connect said remote electronic control unit (40) to said motorized lens changing unit (84);
the method comprising the steps of:
- sending (70), by said remote electronic control unit (40) to said motorized lens changing unit (84) a lens changing signal (25), upon a command of the operator, or doctor, by means of said command means (42) during said displaying step (63);
- arranging said selected lens (54) with said lens optical axis (55) along said microscope optical axis (57) by means of said motorized lens changing unit (84) as a function of said lens changing signal (25).

5. A method according to at least one preceding claim, wherein:
- said digital optical microscope (20) comprises an analyzer polarizing unit (90) comprising an analyzer polarizing filter (88) and a motorized analyzer activation/deactivation moving unit (89) for moving said analyzer polarizing filter (88) from a resting position not arranged along said microscope optical axis (57) to an operating position interposed between the digital optical sensor (21') and said optical lens (54) along said microscope optical axis (57), and vice versa;
and wherein:
- said digital signal communication means (3) are further configured to connect said remote electronic control unit (40) to said motorized analyzer activation/deactivation moving unit (89);
the method comprising the steps of:
- sending (74), by said remote electronic control unit (40) to said analyzer polarizing unit (90) upon a command of said operator, or doctor, an analyzer polarizing unit activation signal (27) during said displaying step (63);
- moving (75) said analyzer polarizing filter (88) from said resting position to said operating position, by means of said analyzer activation/deactivation moving unit (89), as a function of said analyzer polarizing unit activation signal (27),
or
- sending (74), by said remote electronic control unit (40) to said analyzer polarizing unit (90) upon a command of said operator, or doctor, an analyzer polarizing unit deactivation signal (27') during said displaying step (63);
- moving (75) said analyzer polarizing filter (88) from said operating position to said resting position, by means of said analyzer activation/deactivation moving unit (89), as a function of said analyzer polarizing unit deactivation signal (27').

6. A method according to claim 5, wherein:
- said analyzer polarizing unit (90) comprises a motorized rotational adjustment unit (91) to adjust the angular position of said analyzer polarizing filter (88) about a rotational axis of said analyzer polarizing filter arranged along said microscope optical axis (57);
- said digital signal communication means (3) are further configured to connect said remote electronic control unit (40) to said motorized rotational adjustment unit (91);
the method comprising the steps of:
- sending (76), by said remote electronic control unit (40) to said analyzer polarizing unit (90) upon a command of the operator, or doctor, a rotation signal (28) of said analyzer polarizing filter during said displaying step (63);
- rotating (77) said analyzer polarizing filter (88), by means of said motorized rotational adjustment unit (91), as a function of said rotation signal (28) of said analyzer polarizing filter.

7. A method according to at least one preceding claim wherein such digital optical microscope (20) comprises a light intensity adjustment unit (92) of said light source (56), and wherein said digital signal communication means (3) are configured to connect said remote electronic control unit (40) to said light intensity adjustment unit (92);
the method comprising the steps of:
- sending (78), by said remote electronic control unit (40) to said light intensity adjustment unit (92), upon a command of the operator, or doctor, a light intensity adjustment signal (29) during said displaying step (63);
- adjusting (79) the light intensity of said light source (56), by means of said light intensity adjustment unit (92), as a function of said light intensity adjustment signal (29).

8. A method according to at least one preceding claim, comprising a step of transmitting in real time said video stream (50) in live-view mode to one or more remote display-only workstations (4), following a doctor's command provided to said remote electronic control unit (40) by means of said command means (42).

9. A digital image acquisition system (100) comprising:
- an acquisition workstation (1);
- a digital optical microscope (20) placed in the acquisition workstation (1) comprising an electronic acquisition unit (21) of a video stream (50) of a sample to be examined (51) comprising a digital optical sensor (21'), a sample-holder table (52) having a seat for a sample (53) adapted to accommodate or support said sample to be analyzed (51), an optical lens (54) associated with said acquisition unit (21) and defining a lens optical axis (55) and a lens focal point, a light source (56) oriented toward said seat for a sample (53) to illuminate said sample to be examined (51), said digital optical microscope (20) defining a microscope optical axis (57) passing through said digital optical sensor (21') and said seat for a sample (53), coaxial with said lens optical axis (55);
- an analysis workstation (2) remote from said acquisition workstation (1);
- a remote electronic control unit (40) for said digital optical microscope (20) located in the analysis workstation (2) remote from said acquisition workstation (1), said remote electronic control unit (40) comprising display means (41) to allow an operator, or a doctor, to display in live-view mode said video stream (50) of said sample to be examined (51), in said analysis workstation (2), and command means (42) operable by said operator, or doctor, in said analysis workstation (2) to select one or more images containing representative information for analyzing said sample, from said acquired video stream (50), during the real-time display in live-view mode, said remote electronic control unit (40) of said digital optical microscope further comprising storage means (43) for storing said one or more selected digital images;
- digital signal communication means (3) configured to connect said remote electronic control unit (40) to said electronic image acquisition unit (21) of the digital optical microscope (20);
- wherein said digital signal communication means (3) are configured to connect said remote electronic control unit (40) to said first motorized activation/deactivation moving unit (86);
**characterised in that** said digital optical microscope (20) comprises a first polarizing unit (87) comprising a first polarizing filter (87) and a first motorized activation/ deactivation moving unit (86) for moving said first polarizing filter (85) from a resting position not arranged along said microscope optical axis (57) to an operating position interposed between said light source (56) and said sample-holder table (52) along said microscope optical axis (57), and vice versa.

10. A digital image acquisition system (100), according to claim 9, wherein:
- said digital optical microscope (20) comprises a motorized sample-holder table moving unit (58) configured to move said sample-holder table (52) along two movement axes (X, Y) orthogonal to each other and orthogonal to said microscope optical axis (57), and wherein said digital signal communication means (3) are configured to connect said remote electronic control unit (40) to said motorized sample-holder table moving unit (58);
and/or wherein:
- said digital optical microscope (20) comprises a motorized focus distance adjustment unit (59) for adjusting the relative distance between said lens focal point and said seat for a sample (53) measured along an adjustment axis (Z) parallel to said microscope optical axis (57); and wherein digital signal communication means (3) are configured to connect said remote electronic control unit (40) to said motorized focus distance adjustment unit (59).

11. A digital image acquisition system (100) according to claim 9 or 10, wherein said digital optical microscope (20) comprises a motorized lens changing unit (84) comprising a plurality of lenses having respective mutually different focal lengths, wherein said motorized lens changing unit (84) is configured to selectively position a selected lens (54) of said plurality so that the optical axis of said selected lens (54) is positioned along said microscope optical axis (57), and wherein said digital signal communication means (3) are configured to connect said remote electronic control unit (40) to said motorized lens changing unit (84).

12. A digital image acquisition system (100) according to claim 9, wherein said digital optical microscope (20) comprises an analyzer polarizing unit (90) comprising an analyzer polarizing filter (88) and a motorized analyzer activation/deactivation moving unit (89) for moving said analyzer polarizing filter (88) from a resting position not arranged along said microscope optical axis (57) to an operating position interposed between said digital optical sensor (21') and said optical lens (54) along said microscope optical axis (57), and vice versa; and wherein said digital signal communication means (3) are further configured to connect said remote electronic control unit (40) to said motorized analyzer activation/deactivation moving unit (89).

13. A digital image acquisition system (100) according to claim 12, wherein said analyzer polarizing unit (90) comprises a motorized rotational adjustment unit (91) to adjust the angular position of said analyzer polarizing filter (88) about a rotational axis of said analyzer polarizing filter (88) arranged along said microscope optical axis (57); and wherein digital signal communication means (3) are further configured to connect said remote electronic control unit (40) to said motorized rotational adjustment unit (91).

14. A digital image acquisition system (100) according to claim 9, wherein said digital optical microscope (20) comprises a light intensity adjustment unit (92) of said light source (56), and wherein said digital signal communication means (3) are configured to connect said remote electronic control unit (40) to said light intensity adjustment unit (92).

15. A digital image acquisition system (100), according to claim 9, wherein said remote control unit (40) is configured to allow said operator, or doctor, to draw on said selected image, one or more lines and/or one or more marks, by means of said command means (42).

## Patentansprüche

1. Verfahren zur Echtzeiterfassung und -übertragung eines digitalen Videostreams (50) im Live-View-Modus einer zu untersuchenden Probe (51), die an einer Erfassungsarbeitsstation (1) platziert ist, an eine Analysearbeitsstation (2), wobei die Analysearbeitsstation (2) von der Erfassungsarbeitsstation (1) entfernt angeordnet ist, wobei der digitale Videostream (50) durch ein digitales Bilderfassungssystem (100) erzeugt wird, das umfasst:
- ein digitales optisches Mikroskop (20), das in der Erfassungsarbeitsstation (1) platziert ist, wobei das digitale optische Mikroskop (20) eine elektronische Erfassungseinheit (21) eines Videostreams (50) der zu untersuchenden Probe (51) aufweist, umfassend einen digitalen optischen Sensor (21'), einen Probenhaltertisch (52) mit einer Aufnahme für eine Probe (53), die dazu ausgelegt ist, die zu untersuchende Probe (51) aufzunehmen oder zu stützen, eine optische Linse (54), die der Erfassungseinheit (21) zugeordnet ist und eine optische Linsenachse (55) und einen Linsenbrennpunkt definiert, eine Lichtquelle (56), die auf die Aufnahme für eine Probe (53) ausgerichtet ist, um die zu untersuchende Probe (51) zu beleuchten, wobei das digitale optische Mikroskop (20) eine optische Mikroskopachse (57) definiert, die durch den digitalen optischen Sensor und die Aufnahme für eine Probe (53) verläuft und koaxial zur optischen Linsenachse (55) ist;
- eine elektronische Fernsteuerungseinheit (40) für das digitale optische Mikroskop, die in der Analysearbeitsstation (2) platziert ist, wobei die elektronische Fernsteuerungseinheit (40) Anzeigemittel (41) zum Anzeigen des Videostreams (50) im Live-View-Modus der zu untersuchenden Probe, Befehlsmittel (42) und Speichermittel (43) umfasst;
- Digitalsignalkommunikationsmittel (3), die konfiguriert sind, um die elektronische Fernsteuerungseinheit (40) mit der elektronischen Erfassungseinheit (21) des Videostreams (50) zu verbinden, und konfiguriert sind, um die elektronische Fernsteuerungseinheit (40) mit der ersten motorisierten Aktivierungs-/Deaktivierungsbewegungseinheit (86) zu verbinden;
wobei das Verfahren die Schritte umfasst:
- Senden (60) eines Erfassungsstartsignals (23) des Videostreams der zu untersuchenden Probe durch die elektronische Fernsteuerungseinheit (40) auf Befehl eines Bedieners oder eines Arztes in der Analysearbeitsstation (2) an die elektronische Erfassungseinheit (21), um den Videostream (50) der zu untersuchenden Probe zu erfassen;
- Erfassen (61) des Videostreams (50) durch die elektronische Erfassungseinheit (21) des digitalen optischen Mikroskops (20);
- Übertragen (62) des Video-Streamings (50) in Echtzeit von der elektronischen Erfassungseinheit (21) an die elektronische Fernsteuerungseinheit (40) mittels der Digitalsignalkommunikationsmittel (3),
- Anzeigen (63) des erfassten Videostreams (50) im Live-View-Modus in der Analysearbeitsstation (2) mittels der Anzeigemittel (41) der elektronischen Steuerungseinheit (40);
**dadurch gekennzeichnet, dass**
das digitale optische Mikroskop (20) eine erste Polarisationseinheit (87) umfasst, die einen ersten Polarisationsfilter (85) und eine erste motorisierte Aktivierungs-/Deaktivierungsbewegungseinheit (86) zum Bewegen des ersten Polarisationsfilters (85) aus einer Ruheposition, die nicht entlang der optischen Mikroskopachse (57) angeordnet ist, in eine Betriebsposition, die zwischen der Lichtquelle (56) und dem Probenhaltertisch (52) entlang der optischen Mikroskopachse (57) angeordnet ist, und umgekehrt umfasst;
ferner **dadurch gekennzeichnet, dass** das Verfahren umfasst:
- Senden (72) eines ersten Polarisationseinheitsaktivierungssignals (26) durch die elektronische Fernsteuerungseinheit (40) an die erste motorisierte Aktivierungs-/Deaktivierungsbewegungseinheit (86) auf Befehl des Bedieners oder Arztes während des Anzeigeschritts (63); und Bewegen (73) des ersten Polarisationsfilters (85) aus der Ruheposition in die Betriebsposition mittels der ersten motorisierten Aktivierungs-/Deaktivierungsbewegungseinheit (86) als Funktion des ersten Polarisationseinheitsaktivierungssignals (26),
oder
- Senden (72) eines ersten Polarisationseinheitsdeaktivierungssignals (26') durch die elektronische Fernsteuerungseinheit (40) an die erste motorisierte Aktivierungs-/Deaktivierungsbewegungseinheit (86) auf Befehl des Bedieners oder Arztes während des Anzeigeschritts (63); und Bewegen (73) des ersten Polarisationsfilters (85) aus der Betriebsposition in die Ruheposition mittels der ersten motorisierten Aktivierungs-/Deaktivierungsbewegungseinheit (86) als Funktion des ersten Polarisationseinheitsdeaktivierungssignals (26');
- Auswählen (64) eines oder mehrerer Bilder, die repräsentative Informationen für die Analyse der Probe enthalten, aus dem erfassten Videostream (50) durch den Bediener oder Arzt mittels der Befehlsmittel (42) in der Analysearbeitsstation (2) während des Anzeigeschritts (63);
- Speichern (65) des einen oder der mehreren ausgewählten Bilder mittels der Speichermittel (43) der elektronischen Fernsteuerungseinheit (40) in der Analysearbeitsstation (2).

2. Verfahren nach Anspruch 1, wobei:
- das digitale optische Mikroskop (20) eine motorisierte Probenhaltertischbewegungseinheit (58) umfasst, die konfiguriert ist, um den Probenhaltertisch (52) entlang zweier Bewegungsachsen (X, Y) zu bewegen, die orthogonal zueinander und orthogonal zur optischen Mikroskopachse (57) verlaufen, und wobei
- die Digitalsignalkommunikationsmittel (3) konfiguriert sind, um die elektronische Fernsteuerungseinheit (40) mit der motorisierten Probenhaltertischbewegungseinheit (58) zu verbinden;
wobei das Verfahren die Schritte umfasst:
- Senden (66) eines Tischbewegungssignals (24) durch die elektronische Fernsteuerungseinheit (40) an die motorisierte Probenhaltertischbewegungseinheit (58) auf Befehl des Bedieners oder Arztes, der während des Anzeigeschritts (63) mittels der Befehlsmittel (42) bereitgestellt wird;
- Bewegen des Probenhaltertisches entlang der zwei Bewegungsachsen (X, Y) durch die motorisierte Probenhaltertischbewegungseinheit als Funktion des Tischbewegungssignals (24).

3. Verfahren nach Anspruch 1 oder 2, wobei:
- das digitale optische Mikroskop eine motorisierte Fokusabstandseinstelleinheit (59) umfasst, um den relativen Abstand zwischen dem Linsenbrennpunkt und der Aufnahme für eine Probe (53) einzustellen, gemessen entlang einer Einstellachse (Z) parallel zur optischen Mikroskopachse (57);
wobei
- die Digitalsignalkommunikationsmittel (3) konfiguriert sind, um die elektronische Fernsteuerungseinheit (40) mit der motorisierten Fokusabstandseinstelleinheit (59) zu verbinden;
wobei das Verfahren die Schritte umfasst:
- Senden (68) eines Fokusabstandseinstellsignals (24') durch die elektronische Fernsteuerungseinheit (40) an die motorisierte Fokusabstandseinstelleinheit (59) auf Befehl des Bedieners oder Arztes, der während des Anzeigeschritts (63) mittels der Befehlsmittel (42) bereitgestellt wird;
- Bewegen des Probenhaltertisches (52) und/oder der optischen Linse (54) entlang der Einstellachse (Z) mittels der motorisierten Fokusabstandseinstelleinheit (59) als Funktion des Einstellsignals (24').

4. Verfahren nach mindestens einem der vorhergehenden Ansprüche, wobei:
- das digitale optische Mikroskop (20) eine motorisierte Linsenwechseleinheit (84) umfasst, die eine Vielzahl von Linsen mit jeweils unterschiedlichen Brennweiten umfasst, wobei die motorisierte Linsenwechseleinheit (84) konfiguriert ist, um eine ausgewählte Linse (54) der Vielzahl selektiv so zu positionieren, dass die optische Achse der ausgewählten Linse (55) entlang der optischen Mikroskopachse (57) positioniert ist, wobei
die Digitalsignalkommunikationsmittel (3) konfiguriert sind, um die elektronische Fernsteuerungseinheit (40) mit der motorisierten Linsenwechseleinheit (84) zu verbinden;
wobei das Verfahren die Schritte umfasst:
- Senden (70) eines Linsenwechselsignals (25) durch die elektronische Fernsteuerungseinheit (40) an die motorisierte Linsenwechseleinheit (84) auf Befehl des Bedieners oder Arztes mittels der Befehlsmittel (42) während des Anzeigeschritts (63);
- Anordnen der ausgewählten Linse (54) mit der optischen Linsenachse (55) entlang der optischen Mikroskopachse (57) mittels der motorisierten Linsenwechseleinheit (84) als Funktion des Linsenwechselsignals (25).

5. Verfahren nach mindestens einem der vorhergehenden Ansprüche, wobei:
- das digitale optische Mikroskop (20) eine Analysatorpolarisationseinheit (90) umfasst, die einen Analysatorpolarisationsfilter (88) und eine motorisierte Analysatoraktivierungs-/Deaktivierungsbewegungseinheit (89) zum Bewegen des Analysatorpolarisationsfilters (88) aus einer Ruheposition, die nicht entlang der optischen Mikroskopachse (57) angeordnet ist, in eine Betriebsposition, die zwischen dem digitalen optischen Sensor (21') und der optischen Linse (54) entlang der optischen Mikroskopachse (57) angeordnet ist, und umgekehrt umfasst;
und wobei:
- die Digitalsignalkommunikationsmittel (3) ferner konfiguriert sind, um die elektronische Fernsteuerungseinheit (40) mit der motorisierten Analysatoraktivierungs-/Deaktivierungsbewegungseinheit (89) zu verbinden;
wobei das Verfahren die Schritte umfasst:
- Senden (74) eines Analysatorpolarisationseinheitsaktivierungssignals (27) durch die elektronische Fernsteuerungseinheit (40) an die Analysatorpolarisationseinheit (90) auf Befehl des Bedieners oder Arztes während des Anzeigeschritts (63);
- Bewegen (75) des Analysatorpolarisationsfilters (88) aus der Ruheposition in die Betriebsposition mittels der Analysatoraktivierungs-/Deaktivierungsbewegungseinheit (89) als Funktion des Analysatorpolarisationseinheitsaktivierungssignals (27),
oder
- Senden (74) eines Analysatorpolarisationseinheitsdeaktivierungssignals (27') durch die elektronische Fernsteuerungseinheit (40) an die Analysatorpolarisationseinheit (90) auf Befehl des Bedieners oder Arztes während des Anzeigeschritts (63);
- Bewegen (75) des Analysatorpolarisationsfilters (88) aus der Betriebsposition in die Ruheposition mittels der Analysatoraktivierungs-/Deaktivierungsbewegungseinheit (89) als Funktion des Analysatorpolarisationseinheitsdeaktivierungssignals (27').

6. Verfahren nach Anspruch 5, wobei:
- die Analysatorpolarisationseinheit (90) eine motorisierte Rotationseinstelleinheit (91) umfasst, um die Winkelposition des Analysatorpolarisationsfilters (88) um eine Rotationsachse des Analysatorpolarisationsfilters, die entlang der optischen Mikroskopachse (57) angeordnet ist, einzustellen;
- die Digitalsignalkommunikationsmittel (3) ferner konfiguriert sind, um die elektronische Fernsteuerungseinheit (40) mit der motorisierten Rotationseinstelleinheit (91) zu verbinden;
wobei das Verfahren die Schritte umfasst:
- Senden (76) eines Rotationssignals (28) des Analysatorpolarisationsfilters durch die elektronische Fernsteuerungseinheit (40) an die Analysatorpolarisationseinheit (90) auf Befehl des Bedieners oder Arztes während des Anzeigeschritts (63);
- Rotieren (77) des Analysatorpolarisationsfilters (88) mittels der motorisierten Rotationseinstelleinheit (91) als Funktion des Rotationssignals (28) des Analysatorpolarisationsfilters.

7. Verfahren nach mindestens einem der vorhergehenden Ansprüche, wobei ein derartiges digitales optisches Mikroskop (20) eine Lichtintensitätseinstelleinheit (92) der Lichtquelle (56) umfasst, und wobei die Digitalsignalkommunikationsmittel (3) konfiguriert sind, um die elektronische Fernsteuerungseinheit (40) mit der Lichtintensitätseinstelleinheit (92) zu verbinden;
wobei das Verfahren die Schritte umfasst:
- Senden (78) eines Lichtintensitätseinstellsignals (29) durch die elektronische Fernsteuerungseinheit (40) an die Lichtintensitätseinstelleinheit (92) auf Befehl des Bedieners oder Arztes während des Anzeigeschritts (63);
- Einstellen (79) der Lichtintensität der Lichtquelle (56) mittels der Lichtintensitätseinstelleinheit (92) als Funktion des Lichtintensitätseinstellsignals (29).

8. Verfahren nach mindestens einem der vorhergehenden Ansprüche, umfassend einen Schritt des Übertragens des Videostreams (50) im Live-View-Modus in Echtzeit an eine oder mehrere entfernte, nur zur Anzeige dienende Arbeitsstationen (4) nach einem Befehl eines Arztes, der der elektronischen Fernsteuerungseinheit (40) mittels der Befehlsmittel (42) bereitgestellt wurde.

9. Digitales Bilderfassungssystem (100), umfassend:
- eine Erfassungsarbeitsstation (1);
- ein digitales optisches Mikroskop (20), das in der Erfassungsarbeitsstation (1) platziert ist, umfassend eine elektronische Erfassungseinheit (21) eines Videostreams (50) einer zu untersuchenden Probe (51), umfassend einen digitalen optischen Sensor (21'), einen Probenhaltertisch (52) mit einer Aufnahme für eine Probe (53), die dazu ausgelegt ist, die zu analysierende Probe (51) aufzunehmen oder zu stützen, eine optische Linse (54), die der Erfassungseinheit (21) zugeordnet ist und eine optische Linsenachse (55) und einen Linsenbrennpunkt definiert, eine Lichtquelle (56), die auf die Aufnahme für eine Probe (53) ausgerichtet ist, um die zu untersuchende Probe (51) zu beleuchten, wobei das digitale optische Mikroskop (20) eine optische Mikroskopachse (57) definiert, die durch den digitalen optischen Sensor (21') und die Aufnahme für eine Probe (53) verläuft und koaxial zur optischen Linsenachse (55) ist;
- eine Analysearbeitsstation (2), die von der Erfassungsarbeitsstation (1) entfernt angeordnet ist;
- eine elektronische Fernsteuerungseinheit (40) für das digitale optische Mikroskop (20), die sich in der von der Erfassungsarbeitsstation (1) entfernten Analysearbeitsstation (2) befindet, wobei die elektronische Fernsteuerungseinheit (40) Anzeigemittel (41) umfasst, um einem Bediener oder einem Arzt zu ermöglichen, den Videostream (50) der zu untersuchenden Probe (51) im Live-View-Modus in der Analysearbeitsstation (2) anzuzeigen, und Befehlsmittel (42), die durch den Bediener oder Arzt in der Analysearbeitsstation (2) betätigbar sind, um ein oder mehrere Bilder, die repräsentative Informationen zur Analyse der Probe enthalten, aus dem erfassten Videostream (50) während der Echtzeitanzeige im Live-View-Modus auszuwählen, wobei die elektronische Fernsteuerungseinheit (40) des digitalen optischen Mikroskops ferner Speichermittel (43) zum Speichern der einen oder mehreren ausgewählten digitalen Bilder umfasst;
- Digitalsignalkommunikationsmittel (3), die konfiguriert sind, um die elektronische Fernsteuerungseinheit (40) mit der elektronischen Bilderfassungseinheit (21) des digitalen optischen Mikroskops (20) zu verbinden;
- wobei die Digitalsignalkommunikationsmittel (3) konfiguriert sind, um die elektronische Fernsteuerungseinheit (40) mit der ersten motorisierten Aktivierungs-/Deaktivierungsbewegungseinheit (86) zu verbinden;
**dadurch gekennzeichnet, dass** das digitale optische Mikroskop (20) eine erste Polarisationseinheit (87) umfasst, die einen ersten Polarisationsfilter (87) und eine erste motorisierte Aktivierungs-/Deaktivierungsbewegungseinheit (86) zum Bewegen des ersten Polarisationsfilters (85) aus einer Ruheposition, die nicht entlang der optischen Mikroskopachse (57) angeordnet ist, in eine Betriebsposition, die zwischen der Lichtquelle (56) und dem Probenhaltertisch (52) entlang der optischen Mikroskopachse (57) angeordnet ist, und umgekehrt umfasst.

10. Digitales Bilderfassungssystem (100) nach Anspruch 9, wobei:
- das digitale optische Mikroskop (20) eine motorisierte Probenhaltertischbewegungseinheit (58) umfasst, die konfiguriert ist, um den Probenhaltertisch (52) entlang zweier Bewegungsachsen (X, Y) zu bewegen, die orthogonal zueinander und orthogonal zur optischen Mikroskopachse (57) verlaufen, und wobei die Digitalsignalkommunikationsmittel (3) konfiguriert sind, um die elektronische Fernsteuerungseinheit (40) mit der motorisierten Probenhaltertischbewegungseinheit (58) zu verbinden;
und/oder wobei:
- das digitale optische Mikroskop (20) eine motorisierte Fokusabstandseinstelleinheit (59) zum Einstellen des relativen Abstands zwischen dem Linsenbrennpunkt und der Aufnahme für eine Probe (53) umfasst, gemessen entlang einer Einstellachse (Z) parallel zur optischen Mikroskopachse (57); und wobei Digitalsignalkommunikationsmittel (3) konfiguriert sind, um die elektronische Fernsteuerungseinheit (40) mit der motorisierten Fokusabstandseinstelleinheit (59) zu verbinden.

11. Digitales Bilderfassungssystem (100) nach Anspruch 9 oder 10, wobei das digitale optische Mikroskop (20) eine motorisierte Linsenwechseleinheit (84) umfasst, die eine Vielzahl von Linsen mit jeweils unterschiedlichen Brennweiten umfasst, wobei die motorisierte Linsenwechseleinheit (84) konfiguriert ist, um eine ausgewählte Linse (54) der Vielzahl selektiv so zu positionieren, dass die optische Achse der ausgewählten Linse (54) entlang der optischen Mikroskopachse (57) positioniert ist, und wobei die Digitalsignalkommunikationsmittel (3) konfiguriert sind, um die elektronische Fernsteuerungseinheit (40) mit der motorisierten Linsenwechseleinheit (84) zu verbinden.

12. Digitales Bilderfassungssystem (100) nach Anspruch 9, wobei das digitale optische Mikroskop (20) eine Analysatorpolarisationseinheit (90) umfasst, die einen Analysatorpolarisationsfilter (88) und eine motorisierte Analysatoraktivierungs-/Deaktivierungsbewegungseinheit (89) zum Bewegen des Analysatorpolarisationsfilters (88) aus einer Ruheposition, die nicht entlang der optischen Mikroskopachse (57) angeordnet ist, in eine Betriebsposition, die zwischen dem digitalen optischen Sensor (21') und der optischen Linse (54) entlang der optischen Mikroskopachse (57) angeordnet ist, und umgekehrt umfasst; und
wobei die Digitalsignalkommunikationsmittel (3) ferner konfiguriert sind, um die elektronische Fernsteuerungseinheit (40) mit der motorisierten Analysatoraktivierungs-/Deaktivierungsbewegungseinheit (89) zu verbinden.

13. Digitales Bilderfassungssystem (100) nach Anspruch 12, wobei die Analysatorpolarisationseinheit (90) eine motorisierte Rotationseinstelleinheit (91) umfasst, um die Winkelposition des Analysatorpolarisationsfilters (88) um eine Rotationsachse des Analysatorpolarisationsfilters (88) einzustellen, die entlang der optischen Mikroskopachse (57) angeordnet ist; und wobei Digitalsignalkommunikationsmittel (3) ferner konfiguriert sind, um die elektronische Fernsteuerungseinheit (40) mit der motorisierten Rotationseinstelleinheit (91) zu verbinden.

14. Digitales Bilderfassungssystem (100) nach Anspruch 9, wobei das digitale optische Mikroskop (20) eine Lichtintensitätseinstelleinheit (92) der Lichtquelle (56) umfasst, und wobei die Digitalsignalkommunikationsmittel (3) konfiguriert sind, um die elektronische Fernsteuerungseinheit (40) mit der Lichtintensitätseinstelleinheit (92) zu verbinden.

15. Digitales Bilderfassungssystem (100) nach Anspruch 9, wobei die Fernsteuerungseinheit (40) konfiguriert ist, um dem Bediener oder Arzt zu ermöglichen, auf dem ausgewählten Bild eine oder mehrere Linien und/oder eine oder mehrere Markierungen mittels der Befehlsmittel (42) zu zeichnen.

## Revendications

1. Procédé d'acquisition et de transmission en temps réel d'un flux vidéo numérique (50) en mode de visualisation en direct d'un échantillon à examiner (51) placé au niveau d'un poste d'acquisition (1) vers un poste d'analyse (2), ledit poste d'analyse (2) étant distant dudit poste d'acquisition (1), ledit flux vidéo numérique (50) étant généré par un système d'acquisition d'images numériques (100) qui comprend:
- un microscope optique numérique (20) placé dans ledit poste d'acquisition (1), ledit microscope optique numérique (20) ayant une unité d'acquisition électronique (21) d'un flux vidéo (50) dudit échantillon à examiner (51) comprenant un capteur optique numérique (21'), une table porte-échantillon (52) ayant un siège pour un échantillon (53) adapté pour recevoir ou supporter ledit échantillon à examiner (51), une lentille optique (54) associée à ladite unité d'acquisition (21) et définissant un axe optique de lentille (55) et un point focal de lentille, une source de lumière (56) orientée vers ledit siège pour un échantillon (53) pour éclairer ledit échantillon à examiner (51), ledit microscope optique numérique (20) définissant un axe optique de microscope (57) passant à travers ledit capteur optique numérique et ledit siège pour un échantillon (53), coaxial avec ledit axe optique de lentille (55) ;
- une unité de commande électronique à distance (40) pour ledit microscope optique numérique placé dans ledit poste d'analyse (2), ladite unité de commande électronique à distance (40) comprenant des moyens d'affichage (41) pour afficher ledit flux vidéo (50) en mode de visualisation en direct dudit échantillon à examiner, des moyens de commande (42), des moyens de stockage (43) ;
- des moyens de communication de signal numérique (3) configurés pour relier ladite unité de commande électronique à distance (40) à ladite unité d'acquisition électronique (21) dudit flux vidéo (50), et configuré pour relier ladite unité de commande électronique à distance (40) à ladite première unité mobile motorisée d'activation/désactivation (86) ;
le procédé comprend les étapes suivantes :
- envoyer (60), par ladite unité de commande électronique à distance (40) sur commande d'un opérateur, ou d'un médecin, dans ledit poste d'analyse (2), un signal de début d'acquisition (23) dudit flux vidéo de l'échantillon à examiner, à l'unité d'acquisition électronique (21) pour acquérir ledit flux vidéo (50) de l'échantillon à examiner ;
- acquérir (61) ledit flux vidéo (50) par ladite unité d'acquisition électronique (21) du microscope optique numérique (20) ;
- transmettre (62) en temps réel ledit flux vidéo (50) de ladite unité d'acquisition électronique (21) à ladite unité de commande électronique à distance (40) au moyen desdits moyens de communication de signal numérique (3),
- afficher (63) en mode de visualisation en direct ledit flux vidéo acquis (50) dans ledit poste d'analyse (2) au moyen desdits moyens d'affichage (41) de ladite unité de commande électronique (40) ;
**caractérisé en ce que**
ledit microscope optique numérique (20) comprend une première unité de polarisation (87) comprenant un premier filtre de polarisation (85) et une première unité de déplacement motorisée d'activation/désactivation (86) pour déplacer ledit premier filtre de polarisation (85) d'une position de repos non disposée le long dudit axe optique de microscope (57) à une position de fonctionnement interposée entre ladite source de lumière (56) et ladite table porte-échantillon (52) le long dudit axe optique de microscope (57), et vice versa;
**caractérisé en outre en ce que** le procédé comprend:
- envoyer (72), par ladite unité de commande électronique à distance (40) à ladite première unité de déplacement motorisée d'activation/désactivation (86) sur commande de l'opérateur ou du médecin, un premier signal d'activation de l'unité de polarisation (26) pendant ladite étape d'affichage (63); et déplacer (73) ledit premier filtre de polarisation (85) de ladite position de repos à ladite position de fonctionnement, au moyen de ladite première unité mobile motorisée d'activation/désactivation (86), en fonction dudit premier signal d'activation de l'unité de polarisation (26),
ou
- envoyer (72), par ladite unité de commande électronique à distance (40) à ladite première unité mobile motorisée d'activation/désactivation (86) sur commande dudit opérateur, ou médecin, un premier signal de désactivation de l'unité de polarisation (26') pendant ladite étape d'affichage (63); et déplacer (73) ledit premier filtre polarisant (85) de ladite position de fonctionnement à ladite position de repos, au moyen de ladite première unité mobile motorisée d'activation/désactivation (86), en fonction dudit premier signal de désactivation de l'unité de polarisation (26');
- sélectionner (64), par ledit opérateur, ou médecin, au moyen dudit moyen de commande (42) dans ledit poste d'analyse (2), une ou plusieurs images contenant des informations représentatives pour l'analyse dudit échantillon, à partir dudit flux vidéo acquis (50), au cours de l'étape d'affichage (63) ;
- stocker (65) lesdites une ou plusieurs images sélectionnées, au moyen desdits moyens de stockage (43) de ladite unité de commande électronique à distance (40) dans ledit poste d'analyse (2).

2. Procédé selon la revendication 1, dans lequel:
- ledit microscope optique numérique (20) comprend une unité motorisée de déplacement de table porte-échantillon (58) configurée pour déplacer ladite table porte-échantillon (52) le long de deux axes de déplacement (X, Y) orthogonaux l'un à l'autre et orthogonaux audit axe optique du microscope (57), et dans lequel
- lesdits moyens de communication de signal numérique (3) sont configurés pour relier ladite unité de commande électronique à distance (40) à ladite unité de déplacement de table porte-échantillon motorisée (58) ;
le procédé comprend les étapes suivantes :
- envoyer (66), par ladite unité de commande électronique à distance (40) à ladite unité motorisée de déplacement de table porte-échantillon (58), un signal de déplacement de table (24), sur commande de l'opérateur, ou du médecin, fournie au moyen dudit moyen de commande (42) au cours de ladite étape d'affichage (63) ;
- déplacer ladite table porte-échantillon le long desdits deux axes de déplacement (X, Y) par ladite unité motorisée de déplacement de table porte-échantillon en fonction dudit signal de déplacement de table (24).

3. Procédé selon la revendication 1 ou 2, dans lequel:
- ledit microscope optique numérique comprend une unité de réglage motorisé de la distance de mise au point (59) pour régler la distance relative entre ledit point focal de la lentille et ledit siège pour un échantillon (53) mesuré le long d'un axe de réglage (Z) parallèle audit axe optique du microscope (57); dans lequel
- lesdits moyens de communication de signal numérique (3) sont configurés pour relier ladite unité de commande électronique à distance (40) à ladite unité de réglage motorisé de la distance de mise au point (59);
le procédé comprend les étapes suivantes:
- envoyer (68), par ladite unité de commande électronique à distance (40) à ladite unité de réglage motorisé de la distance de mise au point (59), un signal de réglage de la distance de mise au point (24'), sur commande de l'opérateur, ou du médecin, fournie au moyen dudit moyen de commande (42) au cours de ladite étape d'affichage (63) ;
- déplacer ladite table porte-échantillon (52) et/ou ladite lentille optique (54) le long dudit axe de réglage (Z) au moyen de ladite unité de réglage motorisé de la distance de mise au point (59), en fonction dudit signal de réglage (24').

4. Procédé selon au moins une revendication précédente, dans lequel :
- ledit microscope optique numérique (20) comprend une unité de changement de lentille motorisée (84) comprenant une pluralité de lentilles ayant des distances focales respectives mutuellement différentes, dans lequel ladite unité de changement de lentille motorisée (84) est configurée pour positionner sélectivement une lentille sélectionnée (54) de ladite pluralité de sorte que l'axe optique de ladite lentille sélectionnée (55) est positionné le long dudit axe optique du microscope (57), dans lequel
lesdits moyens de communication de signal numérique (3) sont configurés pour relier ladite unité de commande électronique à distance (40) à ladite unité de changement de lentille motorisée (84);
le procédé comprend les étapes suivantes:
- envoyer (70), par ladite unité de commande électronique à distance (40) à ladite unité de changement de lentille motorisée (84) un signal de changement de lentille (25), sur commande de l'opérateur, ou du médecin, au moyen dudit moyen de commande (42) au cours de ladite étape d'affichage (63);
- disposer ladite lentille sélectionnée (54) avec ledit axe optique de lentille (55) le long dudit axe optique de microscope (57) au moyen de ladite unité de changement de lentille motorisée (84) en fonction dudit signal de changement de lentille (25).

5. Procédé selon au moins une revendication précédente, dans lequel:
- ledit microscope optique numérique (20) comprend une unité de polarisation d'analyseur (90) comprenant un filtre de polarisation d'analyseur (88) et une unité de déplacement motorisée d'activation/désactivation d'analyseur (89) pour déplacer ledit filtre de polarisation d'analyseur (88) d'une position de repos non disposée le long dudit axe optique de microscope (57) à une position de fonctionnement interposée entre le capteur optique numérique (21') et ladite lentille optique (54) le long dudit axe optique de microscope (57), et vice versa ;
et dans lequel :
- lesdits moyens de communication de signal numérique (3) sont en outre configurés pour relier ladite unité de commande électronique à distance (40) à ladite unité mobile d'activation/désactivation d'analyseur motorisé (89) ;
le procédé comprend les étapes suivantes :
- envoyer (74), par ladite unité de commande électronique à distance (40) à ladite unité de polarisation de l'analyseur (90) sur commande dudit opérateur, ou médecin, un signal d'activation de l'unité de polarisation de l'analyseur (27) pendant ladite étape d'affichage (63);
- déplacer (75) ledit filtre polarisant de l'analyseur (88) de ladite position de repos à ladite position de fonctionnement, au moyen de ladite unité mobile d'activation/désactivation de l'analyseur (89), en fonction dudit signal d'activation de l'unité polarisante de l'analyseur (27),
ou
- envoyer (74), par ladite unité de commande électronique à distance (40) à ladite unité de polarisation de l'analyseur (90) sur commande dudit opérateur, ou médecin, un signal de désactivation de l'unité de polarisation de l'analyseur (27') pendant ladite étape d'affichage (63) ;
- déplacer (75) ledit filtre polarisant d'analyseur (88) de ladite position de fonctionnement à ladite position de repos, au moyen de ladite unité de déplacement d'activation/désactivation d'analyseur (89), en fonction dudit signal de désactivation d'unité polarisante d'analyseur (27').

6. Procédé selon la revendication 5, dans lequel :
- ladite unité de polarisation de l'analyseur (90) comprend une unité de réglage de rotation motorisée (91) pour régler la position angulaire dudit filtre de polarisation de l'analyseur (88) autour d'un axe de rotation dudit filtre de polarisation de l'analyseur disposé le long dudit axe optique du microscope (57);
- lesdits moyens de communication de signal numérique (3) sont en outre configurés pour relier ladite unité de commande électronique à distance (40) à ladite unité de réglage en rotation motorisée (91);
le procédé comprenant les étapes consistant à:
- envoyer (76), par ladite unité de commande électronique à distance (40) à ladite unité de polarisation de l'analyseur (90) sur commande de l'opérateur, ou du médecin, un signal de rotation (28) dudit filtre de polarisation de l'analyseur pendant ladite étape d'affichage (63);
- faire tourner (77) ledit filtre polarisant d'analyseur (88), au moyen de ladite unité de réglage de rotation motorisée (91), en fonction dudit signal de rotation (28) dudit filtre polarisant d'analyseur.

7. Procédé selon au moins une revendication précédente, dans lequel ledit microscope optique numérique (20) comprend une unité d'ajustement de l'intensité lumineuse (92) de ladite source lumineuse (56), et dans lequel lesdits moyens de communication de signal numérique (3) sont configurés pour relier ladite unité de commande électronique à distance (40) à ladite unité d'ajustement de l'intensité lumineuse (92) ;
le procédé comprend les étapes suivantes:
- envoyer (78), par ladite unité de commande électronique à distance (40) à ladite unité de réglage de l'intensité lumineuse (92), sur commande de l'opérateur, ou du médecin, un signal de réglage de l'intensité lumineuse (29) pendant ladite étape d'affichage (63);
- régler (79) l'intensité lumineuse de ladite source lumineuse (56), au moyen de ladite unité de réglage d'intensité lumineuse (92), en fonction dudit signal de réglage d'intensité lumineuse (29).

8. Procédé selon au moins une revendication précédente, comprenant une étape de transmission en temps réel dudit flux vidéo (50) en mode de visualisation en direct vers un ou plusieurs postes de travail distants à affichage seul (4), suivant une commande du médecin fournie à ladite unité de commande électronique à distance (40) au moyen desdits moyens de commande (42).

9. Système d'acquisition d'images numériques (100) comprenant:
- un poste d'acquisition (1) ;
- un microscope optique numérique (20) placé dans le poste d'acquisition (1) comprenant une unité d'acquisition électronique (21) d'un flux vidéo (50) d'un échantillon à examiner (51) comprenant un capteur optique numérique (21'), une table porte-échantillon (52) ayant un siège pour un échantillon (53) adapté pour recevoir ou supporter ledit échantillon à analyser (51), une lentille optique (54) associée à ladite unité d'acquisition (21) et définissant un axe optique de lentille (55) et un point focal de lentille, une source de lumière (56) orientée vers ledit siège pour un échantillon (53) pour éclairer ledit échantillon à examiner (51), ledit microscope optique numérique (20) définissant un axe optique de microscope (57) traversant ledit capteur optique numérique (21') et ledit siège pour un échantillon (53), coaxial audit axe optique de lentille (55) ;
- un poste d'analyse (2) distant dudit poste d'acquisition (1) ;
- une unité de commande électronique à distance (40) pour ledit microscope optique numérique (20) situé dans le poste d'analyse (2) éloigné dudit poste d'acquisition (1), ladite unité de commande électronique à distance (40) comprenant des moyens d'affichage (41) pour permettre à un opérateur, ou un médecin, d'afficher en mode de visualisation en direct ledit flux vidéo (50) dudit échantillon à examiner (51), dans ledit poste d'analyse (2), et des moyens de commande (42) actionnables par ledit opérateur, ou médecin, dans ledit poste d'analyse (2) pour sélectionner une ou plusieurs images contenant des informations représentatives pour analyser ledit échantillon, à partir dudit flux vidéo acquis (50), pendant l'affichage en temps réel en mode de visualisation en direct, ladite unité de commande électronique à distance (40) dudit microscope optique numérique comprenant en outre des moyens de stockage (43) pour stocker lesdites une ou plusieurs images numériques sélectionnées;
- des moyens de communication de signal numérique (3) configurés pour relier ladite unité de commande électronique à distance (40) à ladite unité d'acquisition d'image électronique (21) du microscope optique numérique (20) ;
- dans lequel lesdits moyens de communication de signal numérique (3) sont configurés pour relier ladite unité de commande électronique à distance (40) à ladite première unité mobile motorisée d'activation/désactivation (86);
**caractérisé en ce que** ledit microscope optique numérique (20) comprend une première unité de polarisation (87) comprenant un premier filtre de polarisation (87) et une première unité de déplacement d'activation/désactivation motorisée (86) pour déplacer ledit premier filtre de polarisation (85) d'une position de repos non disposée le long dudit axe optique de microscope (57) à une position de fonctionnement interposée entre ladite source de lumière (56) et ladite table porte-échantillon (52) le long dudit axe optique de microscope (57), et vice versa.

10. Système d'acquisition d'image numérique (100), selon la revendication 9, dans lequel :
- ledit microscope optique numérique (20) comprend une unité de déplacement de table porte-échantillon motorisée (58) configurée pour déplacer ladite table porte-échantillon (52) le long de deux axes de déplacement (X, Y) orthogonaux l'un à l'autre et orthogonaux audit axe optique du microscope (57), et dans lequel lesdits moyens de communication de signal numérique (3) sont configurés pour relier ladite unité de commande électronique à distance (40) à ladite unité de déplacement de table porte-échantillon motorisée (58);
et/ou dans lequel:
- ledit microscope optique numérique (20) comprend une unité de réglage de distance de mise au point motorisée (59) pour régler la distance relative entre ledit point focal de lentille et ledit siège pour un échantillon (53) mesuré le long d'un axe de réglage (Z) parallèle audit axe optique de microscope (57); et dans lequel des moyens de communication de signal numérique (3) sont configurés pour relier ladite unité de commande électronique à distance (40) à ladite unité de réglage motorisé de la distance de mise au point (59).

11. Système d'acquisition d'image numérique (100) selon la revendication 9 ou 10, dans lequel ledit microscope optique numérique (20) comprend une unité de changement de lentille motorisée (84) comprenant une pluralité de lentilles ayant des distances focales respectives mutuellement différentes, dans lequel ladite unité de changement de lentille motorisée (84) est configurée pour positionner sélectivement une lentille sélectionnée (54) de ladite pluralité de sorte que l'axe optique de ladite lentille sélectionnée (54) est positionné le long dudit axe optique de microscope (57), et dans lequel lesdits moyens de communication de signal numérique (3) sont configurés pour relier ladite unité de commande électronique à distance (40) à ladite unité de changement de lentille motorisée (84).

12. Système d'acquisition d'image numérique (100) selon la revendication 9, dans lequel ledit microscope optique numérique (20) comprend une unité de polarisation d'analyseur (90) comprenant un filtre de polarisation d'analyseur (88) et une unité de déplacement d'activation/désactivation d'analyseur motorisé (89) pour déplacer ledit filtre de polarisation d'analyseur (88) d'une position de repos non disposée le long dudit axe optique de microscope (57) à une position de fonctionnement interposée entre ledit capteur optique numérique (21') et ladite lentille optique (54) le long dudit axe optique de microscope (57), et vice versa ; et
dans lequel lesdits moyens de communication de signal numérique (3) sont en outre configurés pour relier ladite unité de commande électronique à distance (40) à ladite unité mobile d'activation/désactivation d'analyseur motorisé (89).

13. Système d'acquisition d'image numérique (100) selon la revendication 12, dans lequel ladite unité de polarisation d'analyseur (90) comprend une unité de réglage de rotation motorisée (91) pour régler la position angulaire dudit filtre de polarisation d'analyseur (88) autour d'un axe de rotation dudit filtre de polarisation d'analyseur (88) disposé le long dudit axe optique de microscope (57); et dans lequel des moyens de communication de signal numérique (3) sont en outre configurés pour relier ladite unité de commande électronique à distance (40) à ladite unité de réglage de rotation motorisée (91).

14. Système d'acquisition d'image numérique (100) selon la revendication 9, dans lequel ledit microscope optique numérique (20) comprend une unité d'ajustement d'intensité lumineuse (92) de ladite source lumineuse (56), et dans lequel lesdits moyens de communication de signal numérique (3) sont configurés pour relier ladite unité de commande électronique à distance (40) à ladite unité d'ajustement d'intensité lumineuse (92).

15. Système d'acquisition d'image numérique (100), selon la revendication 9, dans lequel ladite unité de commande à distance (40) est configurée pour permettre audit opérateur, ou médecin, de dessiner sur ladite image sélectionnée, une ou plusieurs lignes et/ou une ou plusieurs marques, au moyen dudit moyen de commande (42).
